**Europäisches Patentamt**

**European Patent Office**

**Office européen des brevets**

(19)

(11) Veröffentlichungsnummer: **0 024 693**
**B1**

(12) **EUROPÄISCHE PATENTSCHRIFT**

(45) Veröffentlichungstag der Patentschrift:
25.04.84

(51) Int. Cl.³: **H 01 F 1/11, C 01 G 49/06**

(21) Anmeldenummer: **80104978.4**

(22) Anmeldetag: **21.08.80**

(54) Verfahren zur Herstellung von nadelförmigem ferrimagnetischem Eisenoxid und seine Verwendung.

(30) Priorität: **01.09.79 DE 2935444**

(43) Veröffentlichungstag der Anmeldung:
**11.03.81 Patentblatt 81/10**

(45) Bekanntmachung des Hinweises auf die Patenterteilung:
**25.04.84 Patentblatt 84/17**

(84) Benannte Vertragsstaaten:
**DE FR GB NL**

(56) Entgegenhaltungen:
**EP - A - 0 003 100**
**DE - A - 2 022 013**
**DE - A - 2 064 804**
**DE - A - 2 254 810**
**DE - A - 2 320 182**
**DE - B - 1 250 803**
**FR - A - 2 274 562**
**GB - A - 1 221 434**
**US - A - 3 931 025**

(73) Patentinhaber: **BASF Aktiengesellschaft,
Carl-Bosch-Strasse 38, D-6700 Ludwigshafen (DE)**

(72) Erfinder: **Sarnecki, Wilhelm, Dr., Woogstrasse 48,
D-6703 Limburgerhof (DE)**
Erfinder: **Marosi, Laszlo, Dr., Leuschnerstrasse 32,
D-6700 Ludwigshafen (DE)**
Erfinder: **Autzen, Horst, Dr., Hinter den Ruestern 20,
D-6713 Freinsheim (DE)**
Erfinder: **Ohlinger, Manfred, Dr.,
Anselm-Feuerbach-Strasse 13, D-6710 Frankenthal (DE)**
Erfinder: **Steck, Werner, Dr., Lorscher Strasse 3,
D-6704 Mutterstadt (DE)**

## Verfahren zur Herstellung von nadelförmigem ferrimagnetischem Eisenoxid und seine Verwendung

Die Erfindung betrifft ein Verfahren zur Herstellung von nadelförmigem ferrimagnetischem Eisenoxid durch Tempern von Eisen(III)-oxid oder Eisen(III)-oxidhydroxid, Reduktion des resultierenden Produkts mit Wasserstoff und/oder CO und/oder durch in Gegenwart von Eisenoxiden zersetzlichen organischen Verbindungen zum Magnetit und anschließender Oxidation des Magnetits mit sauerstoffhaltigen Gasen zum nadelförmigen ferrimagnetischen Eisenoxid der Formel $FeO_x$ mit Werten für X von 1,33 bis 1,50 sowie seine Verwendung zur Herstellung von magnetischen Aufzeichnungsträgern.

Nadelförmige ferrimagnetische Eisenoxide, wie Magnetit und Gamma-Eisen(III)-oxid, werden seit langem in großem Umfang als magnetisierbares Material bei der Herstellung von magnetischen Aufzeichnungsträgern eingesetzt. Zur Herstellung des vor allem verwendeten Gamma-Eisen(III)-oxids sind bereits eine Vielzahl von Verfahren bekannt geworden. So beschreibt bereits die GB-A-675 260 ein Verfahren zur Gewinnung von Gamma-Eisen(III)-oxid, bei welchem nadelförmiges $\alpha$-Eisenoxidhydroxid (Goethit) zum $\alpha$-Eisen(III)-oxid entwässert, in reduzierender Atmosphäre bei mehr als 300°C zum Magnetit umgewandelt und an Luft bei Temperaturen unterhalb von 450°C zum nadelförmigen Gamma-Eisen(III)-oxid oxidiert wird. Im Verlaufe der Bemühungen zur Verbesserung der kristallinen, mechanischen und auch magnetischen Eigenschaften solcher Materialien wurde dieser Prozeß in seinen einzelnen Stufen mehrfach variiert sowie gleichfalls durch Änderung der Einsatzstoffe abgewandelt.

Nahezu gleichzeitig mit den Arbeiten zu dem Verfahren gemäß der britischen Patentschrift wurden nach der in der DE-C-801 352 offenbarten Weise, nämlich durch Behandlung von unmagnetischen Eisenoxiden mit den Salzen kurzkettiger Carbonsäuren und anschließendem Erhitzen, geeignete magnetische Eisenoxide erhalten. Der danach gewonnene Magnetit läßt sich durch Oxidation bei 200 bis 400°C ebenfalls in Gamma-Eisen(III)-oxid überführen. Durch die US-A-2 900 236 ist dann bekannt geworden, daß sich sämtliche organische Verbindungen, welche bei Temperaturen unterhalb 540°C unter geringer Teer- und Aschebildung zersetzlich sind, für die Reduktion der unmagnetischen Eisenoxide zum Magnetit eignen. Dazu wird das Eisenoxid mit der gasförmigen, festen oder flüssigen organischen Substanz in Kontakt gebracht und auf eine Temperatur von 540 bis 650°C erhitzt. In den genannten vorbekannten Verfahren wird teils unter Luftausschluß erhitzt, wobei die Reaktion auf der Stufe des Magnetits stehenbleibt, oder auch in Gegenwart von Luft, wodurch der Magnetit sofort zum Gamma-Eisen(III)-oxid oxidiert wird.

Als Ausgangsstoffe für die Herstellung der ferrimagnetischen Eisenoxide gelangen im allgemeinen $\alpha$-FeOOH, auch $\delta$-FeOOH (DE-B-1 203 656) sowie $\gamma$-FeOOH (DE-A-2 212 435) oder Mischungen davon zur Anwendung. Im Rahmen der Weiterverarbeitung wurden die Eisenoxidhydroxide durch Entwässerung bei erhöhter Tempratur in $\alpha$-Fe$_2$O$_3$ überführt. In der DE-B-1 250 803 ist ein Verfahren beschrieben, bei dem die Entwässerung in einem Wirbelschichtreaktor durchgeführt wird. Dabei erfolgt die Fluidisierung mittels Druckluft bei 315 bis 426°C unter gleichzeitiger Entfernung des Hydratwassers. Diese Entwässerung im Wirbelschichtreaktor läßt sich zwar gleichmäßiger und kostengünstiger als nach den üblichen Verfahren bewerkstelligen, sie bringt jedoch bezüglich der magnetischen Eigenschaften des Gamma-Eisen(III)-oxid-Endprodukts kaum eine Verbesserung, weil gerade die späteren Reduktions- und Oxidationsschritte die Teilchenform sehr nachteilig beeinflussen. Es ist deshalb schon mehrfach vorgeschlagen worden, diese Eisenoxide vor ihrer Weiterverarbeitung einer Temperaturbehandlung zu unterwerfen, um auf diese Weise eine Erhöhung der Koerzitivfeldstärke der Endprodukte zu erreichen. Um jedoch diesen Effekt zu bewirken, waren Temperaturen von über 400 bis zu 900°C erforderlich. So beschreibt die EP-A2-3100 die Temperung des durch Entwässerung von $\alpha$-FeOOH erhaltenen Eisen(III)-oxides bei Temperaturen zwischen 400 und 900°C. In gleicher Weise wird gemäß der US-A-3 931 025 vorgegangen. Hierbei kommen Temperaturen von zwischen 600 und 700°C zur Anwendung.

Dies bringt aber den Nachteil mit sich, daß in diesen Temperaturbereichen schon Versinterung der kleinen Teilchen auftreten, die zur Beeinträchtigung der Nadelform der für die bei magnetischen Aufzeichnungsträgern eingesetzten magnetischen Materialien führen.

Der Erfindung lag somit die Aufgabe zugrunde, ein Verfahren zur Herstellung ferrimagnetischer Eisenoxide bereitzustellen, das Produkte mit hoher Koerzitivfeldstärke ergibt, jedoch ohne gleichzeitig die geschilderten Nachteile zu besitzen.

Es wurde nun gefunden, daß sich durch Tempern von nadelförmigem Eisen(III)-oxid oder Eisen(III)-oxidhydroxid, Reduktion des resultierenden Produkts mit Wasserstoff und/oder CO und/oder mit in Gegenwart von Eisenoxiden zersetzlichen organischen Verbindungen bei Temperaturen zwischen 300 und 650°C zum Magnetit und Oxidation des Magnetits mit sauerstoffhaltigen Gasen bei Temperaturen von 150 bis 500°C nadelförmige ferrimagnetische Eisenoxide der Formel $FeO_x$ mit Werten für x von 1,33 bis zu 1,50 und mit den geforderten Eigenschaften herstellen lassen, wenn die Temperbehandlung des nadelförmigen Eisen(III)-oxids oder Eisen(III)-oxidhydroxids bei 220 bis 460°C und einem Wasserdampfpartialdruck von mindestens 30 mbar durchgeführt wird. Die Temperzeit kann dabei je nach eingestellter Temperatur und den angestrebten Meßwerten zwischen 3 Minuten und 8 Stunden gewählt werden. Auch längere Zeiten sind möglich, jedoch nicht mehr wirtschaftlich. Besonders vorteilhaft läßt sich das erfindungsgemäße Verfahren dann durchführen, wenn der Wasserdampfpartialdruck während der Temperbehandlung zwischen 70 und 1013 mbar beträgt.

Die für das erfindungsgemäße Verfahren als Ausgangsstoffe eingesetzten nadelförmigen Eisen(III)-oxide oder -oxidhydroxide werden aus der Gruppe bestehend aus unmittelbar durch Entwässerung erhaltene $\alpha$- oder $\gamma$-Eisen(III)-oxide sowie $\alpha$- oder $\gamma$-Eisen(III)-oxidhydroxid oder aus Gemischen der beiden letztgenannten ausgewählt. Werden die angeführten Oxidhydroxide eingesetzt, so erfolgt im Rahmen der Temperung eine Entwässerung in Richtung auf die entsprechenden Oxide oder deren Gemische.

Die Temperbehandlung der genannten Materialien wird in an sich bekannter Weise durchgeführt. Gemäß dem Verfahren der Erfindung beträgt hierbei die Temperatur 220 bis 460°C, bei der Verwendung von $\alpha$-FeOOH vorteilhafterweise 270° bis 450°C. Wesentlich ist jedoch, daß im Reaktionsraum ein Wasserdampfpartialdruck von mindestens 30 mbar, vorzugsweise zwischen 70 und 1013 mbar herrscht. Diese Wasserdampf enthaltende Atmosphäre läßt sich sowohl durch direkte Zugabe von Wasser oder Wasserdampf in die Temperzone als auch durch Beladen eines die Temperzone durchströmenden Gases, wie Luft oder Stickstoff, mit Wasserdampf einstellen. Werden bei diesem Verfahrensschritt Eisen(III)-oxidhydroxide eingesetzt, so kann der geforderte Wasserdampfpartialdruck durch das bei der Entwässerung der Oxidhydroxide oberhalb von 220°C auftretende Wasser eingestellt werden.

Die aus der beschriebenen Temperbehandlung resultierenden Eisenoxide werden nun in an sich bekannter Weise zu Magnetit reduziert. Zu diesem Zweck wird das erfindungsgemäß getemperte Produkt mit festen oder flüssigen Reduktionsmitteln mechanisch vermischt oder in einer geeigneten Lösung oder Suspension der Substanz damit überzogen und anschließend unter Inertgas auf Temperaturen von 300 bis 650°C erhitzt. In gleicher Weise ist das Verfahren mittels Wasserstoff und/oder CO oder gasförmiger organischer Substanz, die einem Inertgas zudosiert werden, durchführbar. Neben Wasserstoff lassen sich alle nach dem Stand der Technik als geeignet angegebene organische Substanzen verwenden, soweit sie sich bei Temperaturen zwischen 300 und 650°C in Gegenwart von Eisenoxiden zersetzen lassen. Zweckmäßigerweise verwendet man hierzu höhere Fettsäuren, deren Derivate, Glyzerin, Inertgas/Alkoholdampf-Gemische und auch Methan.

Bei der Ausarbeitung des erfindungsgemäßen Verfahrens wurde festgestellt, daß sich die beschriebene Temperung sowie die sich darin anschließende Reduktion auch in nur einer Reaktionsapparatur ausführen läßt. Hierzu wird entweder das benutzte Reduktionsmittel, in diesem Fall Wasserstoff und/oder CO und/oder dampfförmige organische Substanzen nach dem abgeschlossenen Temperschritt über das zu reduzierende Produkt geleitet oder die Temperaturbehandlung sogar in Gegenwart von Wasserstoff und/oder der das Eisenoxid reduzierenden dampfförmigen organischen Substanzen durchgeführt. Bei der letztgenannten Verfahrensvariante ist jedoch Bedingung, daß die Temperbehandlung bei einer solchen Temperatur erfolgt, welche zwar im erfindungsgemäß definierten Bereich, aber unterhalb der Temperatur liegt, bei der bereits die Reduktion der Eisenoxide beginnt. Durch ein anschließendes Anheben der Temperatur läßt sich dann die Reduktion zum Magnetit durchführen.

Der so gewonnene Magnetit wird daraufhin mittels sauerstoffhaltiger Gase bei Temperaturen zwischen 150 und 500°C zu einem nadelförmigen magnetischen Eisenoxid der Formel $FeO_x$ mit Werten für X zwischen 1,33 und 1,50 oxidiert. Im Fall der vollständigen Oxidation, d. h. bei X = 1,50 entsteht Gamma-Eisen(III)-oxid. Die Werte für X oberhalb 1,33 beziehen sich auf die jeweiligen Bertholide.

Die erfindungsgemäß hergestellten nadelförmigen ferrimagnetischen Eisenoxide, vor allem das Gamma-Eisen(III)-oxid zeigen unerwartet vorteilhafte Eigenschaften bei der Verwendung als magnetische Materialien für die Herstellung von magnetischen Aufzeichnungsträgern. Zur Herstellung der magnetischen Schichten wird das ferrimagnetische Eisenoxid in polymeren Bindemitteln dispergiert. Als Bindemittel eignen sich für diesen Zweck bekannte Verbindungen, wie Homo- und Mischpolymerisate von Polyvinylderivaten, Polyurethanen, Polyestern und ähnliche. Die Bindemittel werden in Lösungen in geeigneten organischen Lösungsmitteln verwendet, die gegebenenfalls weitere Zusätze enthalten können. Die magnetischen Schichten werden auf starre oder biegsame Träger wie Platten, Folien und Karten aufgebracht.

Die gemäß der Erfindung hergestellten nadelförmigen ferrimagnetischen Eisenoxide, insbesondere das auf diese Weise erhältliche Gamma-Eisen(III)-oxid, unterscheiden sich überraschenderweise deutlich von den bekannten Gamma-Eisen(III)-oxiden durch eine höhere Koerzitivfeldstärke, bzw. von den durch übliche Hochtemperatur-Behandlung hergestellten hochkoerzitiven Gamma-Eisen(III)-oxiden durch bessere Nadelform. Diese Verbesserungen beim Magnetmaterial machen sich auch sehr deutlich bei den daraus hergestellten magnetischen Aufzeichnungsträgern bemerkbar.

Der Gegenstand der Erfindung wird anhand folgender Beispiele erläutert.

Die magnetischen Pulverwerte der Eisenoxide werden mit einem konventionellen Schwingmagnetometer bei 100 kA/m Meßfeldstärke gemessen. Die Koerzitivfeldstärke ($H_c$) wird in [kA/m], die spezifische Remanenz ($M_r/\rho$) und die spezifische Magnetisierung ($M_m/\rho$) werden in [nT · m³/g] angegeben. Dabei beträgt das Stopfgewicht d der Meßprobe — sofern nichts anderes angegeben — 1,2 g/cm³. Außerdem werden in den verschiedenen Verfahrensstufen die Oberflächenwerte ($S_{N2}$) nach BET der jeweiligen Materialien bestimmt.

**0 024 693**

## Beispiel 1

150 Teile $\gamma$-FeOOH mit einer Oberfläche von 28,7 m²/g werden in einem Rotationsverdampfer bei Normaldruck in einem Luftstrom von 100 l/h eine Stunde auf 350°C erhitzt. Die eingeleitete Luft wird unmittelbar vor Eintritt in die Apparatur durch siedendes Wasser geleitet, und dadurch bei 100°C mit Wasserdampf gesättigt. Das resultierende Produkt wird nach dem Erkalten mit 2 Gew.-% Stearinsäure intensiv vermischt und im Stickstoffstrom 30 Minuten lang auf 500°C erhitzt. Der dabei entstandene Magnetit wird anschließend im Luftstrom bei 250°C innerhalb von einer Stunde zum Gamma-Eisen(III)-oxid oxidiert. Die damit erhaltenen Meßergebnisse sind in Tabelle 1 aufgeführt.

## Vergleichsversuch 1

150 Teile $\gamma$-FeOOH mit einer Oberfläche von 28,7 m²/g werden in einem Rotationsverdampfer im Ölpumpenvakuum eine Stunde auf 350°C erhitzt. Durch Einleiten von trockener Luft mit Hilfe einer Kapillare wird dabei ein Druck von 26 bis 30 mbar aufrechterhalten. Die Weiterverarbeitung des resultierenden Materials wird wie in Beispiel 1 beschrieben vorgenommen. Die Meßergebnisse sind in Tabelle 1 angegeben.

## Beispiel 2

156 Teile $\gamma$-FeOOH mit einer Oberfläche von 23,1 m²/g werden in einem Rotationsverdampfer mit aufgesetztem Rückflußkühler ohne Durchleiten von Luft 8 Stunden lang auf 250°C erhitzt. Durch die Kondensation des aus dem Eisen(III)-oxidhydroxid abgespaltenen Wassers im Rückflußkühler entsteht im Reaktionsraum eine Wasserdampfatmosphäre (pH$_2$O = 1013 mbar). Die anschließende Reduktion zum Magnetit und Oxidation zum Gamma-Eisen(III)-oxid erfolgt wie in Beispiel 1 beschrieben. Die Meßergebnisse sind in Tabelle 1 angegeben.

## Vergleichsversuch 2

156 Teile $\gamma$-FeOOH mit einer Oberfläche von 32,1 m²/g werden in einem Rotationsverdampfer im Ölpumpenvakuum 8 Stunden lang auf 250°C erhitzt. Durch Einleiten von trockener Luft mit Hilfe einer Kapillare wird dabei ein Druck von 26 bis 30 mbar aufrechterhalten. Die daran anschließende Reduktion und Oxidation erfolgt wie in Beispiel 2 beschrieben. Die Meßergebnisse sind in Tabelle 1 angegeben.

## Beispiel 3

100 Teile $\gamma$-FeOOH mit einer Oberfläche von 27,9 m²/g werden in einem Quarzdrehkolben in einem Luftstrom von 100 l/h eine Stunde auf 400°C erhitzt. Die eingeleitete Luft wird unmittelbar vor Eintritt in die Apparatur durch siedendes Wasser geleitet, und dadurch bei 100°C mit Wasserdampf gesättigt. Das resultierende Eisen(III)-oxid wird anschließend bei 320°C zwei Stunden lang im Drehrohr mit Wasserstoff reduziert und anschließend mit Luft innerhalb einer halben Stunde bei 300°C zum Gamma-Eisen(III)-oxid oxidiert. Die Meßergebnisse sind in Tabelle 1 aufgeführt.

## Vergleichsversuch 3

100 Teile des in Beispiel 3 eingesetzten $\gamma$-FeOOH werden im Ölpumpenvakuum eine Stunde auf 400°C erhitzt. Dabei wird über eine Kapillare vorgetrocknete Luft so zugegeben, daß sich ein Druck von 26 bis 30 mbar einstellt. Die Weiterverarbeitung des resultierenden Eisen(III)-oxids geschieht wie in Beispiel 3 beschrieben. Die Meßergebnisse sind in Tabelle 1 aufgeführt.

## Beispiel 4

70 Teile $\alpha$-FeOOH mit einer Oberfläche von 39 m²/g werden in einem Rotationsverdampfer 3 Stunden auf 300°C erhitzt und gleichzeitig ein bei 90°C mit Wasserdampf gesättigter Luftstrom (pH$_2$O im Reaktionsraum = 699 mbar) darübergeleitet. Das resultierende Eisen(III)-oxid wird daraufhin im Drehrohr mit Wasserstoff bei 320°C innerhalb 2 Stunden zum Magnetit reduziert und eine Stunde mit Luft bei 250°C zum Gamma-Eisen(III)-oxid oxidiert. Die Meßergebnisse sind in Tabelle 1 aufgeführt.

4

### Vergleichsversuch 4

70 Teile $\alpha$-FeOOH ($S_{N_2}=39$ m$^2$/g) werden wie im Vergleichsversuch 1 beschrieben erhitzt und das resultierende Material wie in Beispiel 4 beschrieben reduziert und oxidiert. Die Meßergebnisse sind in Tabelle 1 aufgeführt.

Tabelle 1

|  | $S_{N_2}$ | $H_c$ | $M_m/\rho$ | $M_r/\rho$ |
|---|---|---|---|---|
| Beispiel 1 | 27,9 | 25,5 | 79 | 44 |
| Vgl.-Versuch 1 | 28,2 | 21,5 | 75 | 39 |
| Beispiel 2 | 21,7 | 24,8 | 77 | 42 |
| Vgl.-Versuch 2 | 20,1 | 20,2 | 72 | 37 |
| Beispiel 3 | 14,4 | 25,4 | 77 | 41 |
| Vgl.-Versuch 3 | 15,4 | 22,3 | 69 | 36 |
| Beispiel 4 | 17,2 | 30,8 | 81 | 46 |
| Vgl.-Versuch 4 | 16,9 | 26,7 | 78 | 43 |

### Beispiel 5

Je 30 Teile $\gamma$-Fe$_2$O$_3$ mit einer Oberfläche von 41 m$^2$/g, das durch 2stündiges Entwässern von $\gamma$-FeOOH bei 250°C und 26 mbar hergestellt worden war, werden wie in Beispiel 1 beschrieben, getempert, reduziert und oxidiert. Unterschiedlich ist jedoch der Wasserdampfpartialdruck in der Luft bei der Temperbehandlung. Durch Verändern der Temperatur des Wassers durch welches die Luft geleitet wird (20, 40, 70 und 90°C) wird der Wassergehalt auf die in der Tabelle 2 bei den Beispielen 5a bis 5d angegebenen Werte eingestellt. Die Meßergebnisse an den jeweiligen Gamma-Eisen(III)-oxiden sind ebenfalls in Tabelle 2 angegeben.

### Vergleichsversuch 5

Es wird wie in Beispiel 5 beschrieben vorgegangen, jedoch wird die bei der Temperung über das $\gamma$-FeOOH geleitete Luft über Silicagel vorgetrocknet. Die Meßergebnisse sind in Tabelle 2 aufgeführt.

Tabelle 2

|  | pH$_2$O | $H_c$ | $M_m/\rho$ | $M_r/\rho$ |
|---|---|---|---|---|
| Beispiel 5a | 23 | 20,5 | 70 | 34 |
| Beispiel 5b | 74 | 21,2 | 74 | 39 |
| Beispiel 5c | 311 | 23,5 | 74 | 39 |
| Beispiel 5d | 699 | 23,6 | 74 | 40 |
| Vgl.-Versuch 5 | 0 | 20,5 | 72 | 35 |

## Beispiel 6

50 Teile $\gamma$-FeOOH ($S_{N_2}=28{,}7$ m²/g) werden eine Stunde bei 220°C in einem Quarzdrehkolben im Wasserstoffstrom (100 l/h) der durch eine Waschflasche mit 90° warmem Wasser geleitet wird, erhitzt ($pH_2O = 699$ mbar).

Zur Reduktion wird dann die Temperatur auf 320° gesteigert und die Waschflasche mit Wasser auf 50°C gehalten. Nach $^1/_2$ Stunde wird das erhaltene Pulver bei 250° eine Stunde lang im Luftstrom oxidiert. Das resultierende Gamma-Eisen(III)-oxid zeigt die in Tabelle 3 angegebenen Eigenschaften.

## Vergleichsversuch 6

Es wird wie in Beispiel 6 beschrieben verfahren, jedoch wird die Temperung bei 220°C im Strom von trockenem Wasserstoff durchgeführt und erst nach der Temperaturerhöhung auf 320°C eine Waschflasche mit 50°C warmen Wasser in den Gasstrom geschaltet.

Tabelle 3

|  | $S_{N_2}$ | $H_c$ | $M_m/\rho$ | $M_r/\rho$ |
|---|---|---|---|---|
| Beispiel 6 | 17,7 | 27,4 | 83 | 45 |
| Vgl.-Versuch 6 | 20,0 | 22,9 | 79 | 42 |

## Beispiel 7

In eine Topfmühle, welche mit 8000 Teilen Stahlkugeln mit einem Durchmesser von 5 mm gefüllt ist, werden 700 Teile eines gemäß Beispiel 1 hergestellten Gamma-Eisen(III)-oxids, 420 Teile eines Gemisches aus gleichen Teilen Tetrahydrofuran und Dioxan, 8,75 Teilen Lecithin, 8,75 Teilen eines neutralen Polyaminoamidsalzes und 210 Teilen einer 20%igen Lösung eines Copolymerisates aus 80% Vinylchlorid, 10% Dimethylmaleinat und 10% Diäthylmaleinat in einem Gemisch aus gleichen Teilen Tetrahydrofuran und Dioxan eingebracht. Die Mischung wird 40 Stunden vordispergiert. Anschließend werden 1090 Teile einer 10%igen Lösung eines thermoplastischen Polyurethans aus Adipinsäure, 1,4-Butandiol und 4,4'-Diisocyanatodiphenylmethan in einem Gemisch aus gleichen Teilen Tetrahydrofuran und Dioxan, 0,7 Teile Polydimethylsiloxan zugesetzt. Nach weiterem 5stündigem Dispergieren wird die erhaltene Magnetdispersion unter Druck durch ein Filter von 5 µm Porenweite filtriert. Mit einem Linealgießer wird nach der üblichen Technik eine 6 µm starke Polyäthylenterephthalfolie mit der Magnetdispersion beschichtet und nach Durchlaufen eines Magnetfeldes bei Temperaturen zwischen 60 und 100°C getrocknet. Durch Hindurchführen zwischen beheizten Walzen (80°C) unter einem Liniendruck von 30 N/cm wird die Magnetschicht verdichtet. Die beschichtete Folie wird in Bänder von 3,81 mm Breite geschnitten. Die elektroakustische Messung erfolgt nach DIN 45 512, Blatt 2 gegen das Bezugsband T 308 S. Außerdem werden die Schichtdicken d (in µm), die Koerzitivfeldstärke $H_c$ (in kA/m), die remanente Magnetisierung $M_r$ und die Sättigungsmagnetisierung $M_m$ (in mT) bestimmt. Die genannten Meßwerte sind in Tabelle 4 aufgeführt.

## Vergleichsversuch 7

Es wird wie in Beispiel 7 beschrieben verfahren, jedoch wird als magnetisches Material ein nach Vergleichsversuch 1 hergestelltes eingesetzt. Die Meßergebnisse sind in Tabelle 4 aufgeführt.

Tabelle 4

|  | d | $H_c$ | $M_m$ | $M_r$ |
|---|---|---|---|---|
| Beispiel 7 | 4,3 | 26,1 | 170 | 147 |
| Vgl.-Versuch 7 | 4,9 | 22,7 | 157 | 133 |

## Beispiel 8

Je 33 Teile $\gamma$-FeOOH mit einer Oberfläche von 28,7 m²/g werden, wie in Beispiel 1 beschrieben, getempert, reduziert und oxidiert. Unterschiedlich ist jedoch der Wasserdampfpartialdruck in der Luft bei der Temperbehandlung. Durch Verändern der Temperatur des Wassers, durch welches die Luft vor Eintritt in die Apparatur geleitet wird (25° C, 50° C und 75° C), wird ihr Wassergehalt auf die in der Tabelle 5 angegebenen Werte bei den Versuchen 8a bis c eingestellt. Im Versuch d wurde anstatt Luft gesättigter Wasserdampf von 100° C eingeleitet.

Die Meßergebnisse an den entstandenen $\gamma$-Fe$_2$O$_3$-Proben sind in Tabelle 5 angegeben.

## Vergleichsversuch 8

Es wird wie in Beispiel 8a bis c beschrieben vorgegangen, jedoch wird die bei Temperung eingeleitete Luft über Silicagel vorgetrocknet.

Die Meßergebnisse sind in Tabelle 5 aufgeführt:

Tabelle 5

| Versuch | pH$_2$O [mb] | H$_c$ | M$_{m/\rho}$ | M$_{r/\rho}$ |
|---|---|---|---|---|
| 8a | 32 | 21,6 | 72 | 35 |
| 8b | 123 | 23,0 | 74 | 37 |
| 8c | 384 | 23,8 | 74 | 37 |
| 8d | 1013 | 24,2 | 73 | 37 |
| Vergl. 8 | — | 20,8 | 72 | 35 |

## Beispiel 9

200 Teile $\gamma$-FeOOH mit einer Oberfläche von 29,5 m²/g werden 1 h lang auf 300° C erhitzt. Wie im Beispiel 2 beschrieben, wird dabei ein Wasserdampfdruck von 1013 mb aufrechterhalten. Das erhaltene Produkt wird zur Reduktion 30 min lang bei 250° C im CO-Strom erhitzt. Der titrimetrisch ermittelte Eisen-II-Gehalt beträgt dann 24,2%. Der Austrag wird in 4 gleiche Teile geteilt.

Probe a wird nicht weiterbehandelt.

Probe b wird in einem Gemisch Luft : Stickstoff = 1 : 1 10 min lang unter Aufheizen auf 150° C oxidiert.

Probe c wird in einem Gemisch Luft : Stickstoff = 1 : 10 45 min lang bei 150° C oxidiert.

Probe d wird mit Luft 30 min lang bei 250° C oxidiert.

Die Meßergebnisse sind in Tabelle 6 angegeben.

## Vergleichsversuch 9

200 Teile $\gamma$-FeOOH mit einer Oberfläche von 29,5 m²/g werden, wie bei Vergleichsversuch 2 beschrieben, 1 h lang auf 300° C erhitzt. Reduktion und Oxidation erfolgt wie in Beispiel 9 beschrieben.

Die Meßergebnisse sind in Tabelle 6 angegeben.

Tabelle 6

| Probe | Fe : O | $H_c$ | $M_{m/\rho}$ | $M_{r/\rho}$ |
|-------|--------|-------|--------------|--------------|
| 9a | 1 : 1,33 | 20,3 | 80 | 40 |
| 9b | 1 : 1,41 | 24,0 | 73 | 40 |
| 9c | 1 : 1,44 | 26,3 | 78 | 45 |
| 9d | 1 : 1,50 | 22 | 82 | 44 |
| Vergl. 9a | 1 : 1,33 | 16,6 | 64 | 29 |
| Vergl. 9b | 1 : 1,42 | 18,7 | 69 | 36 |
| Vergl. 9c | 1 : 1,45 | 20,2 | 75 | 40 |
| Vergl. 9d | 1 : 1,50 | 17,3 | 73 | 38 |

## Beispiel 10

35 Teile eines Gemisches aus $\gamma$-FeOOH mit 16% $\alpha$-FeOOH und einer Oberfläche von 21,7 m²/g werden in einem beiderseits offenen Drehkolben 1 h bei 350°C erhitzt. Das dabei abgespaltene Wasser entweicht allmählich als Dampf, so daß der Wasserdampfdruck im Reaktionsraum im Verlauf der Reaktion von 1013 mbar auf 30 mbar absinkt.

Das erhaltene Produkt wird, wie in Beispiel 1 beschrieben, reduziert und oxidiert und zeigt dann folgende Meßwerte: $S_{N_2}=22,0$ m²/g; $H_c=24,7$; $M_{m/\rho}=76$, $M_{r/\rho}=41$.

## Vergleichsversuch 10

35 Teile des in Beispiel 10 genannten Gemisches werden wie dort angegeben behandelt, jedoch wird das Erhitzen bei 350°C im Vakuum von 26 bis 30 mbar durchgeführt, wie in Vergleichsbeispiel 3 beschrieben. Man erhält folgende Meßwerte: $S_{N_2}=23,8$ m²/g; $H_c=21,0$; $M_{m/\rho}=74$; $M_{r/\rho}=38$.

## Beispiel 11

175 Teile $\alpha$-FeOOH werden im Vakuum von 26 bis 30 mbar bei 300°C entwässert. Das so erhaltene $\alpha$-Fe$_2$O$_3$ wird in 2 Proben geteilt.

Die erste Probe wird im Drehkolben 1 h lang bei 300°C getempert, wobei durch Einleiten von Wasserdampf im Reaktionsraum ein Wasserdampfdruck von 1013 mbar eingestellt wird.

Reduktion und Oxidation erfolgen wie im Beispiel 10 beschrieben. Man erhält ein Pulver mit den Meßwerten: $H_c=21,9$; $M_{m/\rho}=76$; $M_{r/\rho}=40$.

## Vergleichsversuch 11

Die in Beispiel 11 hergestellte zweite $\alpha$-Fe$_2$O$_3$-Probe wird wie dort beschrieben behandelt, jedoch erfolgt das Tempern bei 300°C im Stickstoffstrom. Die Meßwerte: $H_c=19,3$; $M_{m/\rho}=69$; $M_{r/\rho}=38$.

## Beispiel 12

30 Teile $\gamma$-FeOOH mit einer Oberfläche von 29,5 m²/g wurden in einem Quarzdrehkolben in einem vorgeheizten Ofen so schnell wie möglich erhitzt. Wie in Beispiel 2 beschrieben, wird dabei durch einen aufgesetzten Rückflußkühler im Reaktionsraum ein Wasserdampfdruck von 1013 mbar aufrechterhalten. Nach 2 min werden 220°C erreicht, nach weiteren 3 min 460°C.

Dann wird schnell abgekühlt und das Reaktionsprodukt mit 4 Gew.-% Stearinsäure, wie in Beispiel 1 beschrieben, reduziert und mit Luft oxidiert. Das Produkt zeigt folgende Meßwerte: $H_c=25,4$; $M_{m/\rho}=75$; $M_{r/\rho}=42$.

## Vergleichsversuch 12

30 Teile $\gamma$-FeOOH mit einer Oberfläche von 29,5 m$^2$/g werden wie in Beispiel 12 beschrieben behandelt, jedoch erfolgt das Aufheizen im Luftstrom, der durch Überleiten über Silicagel vorgetrocknet wird. Das Produkt zeigt folgende Meßwerte: $H_c = 24,7$; $M_{m/\rho} = 75$; $M_{r/\rho} = 41$.

**Patentansprüche**

1. Verfahren zur Herstellung von nadelförmigem ferrimagnetischem Eisenoxid durch Tempern von nadelförmigem Eisen(III)-oxid oder Eisen(III)-oxidhydroxid, Reduktion des resultierenden Produkts mit Wasserstoff und/oder CO und/oder mit in Gegenwart von Eisenoxiden zersetzlichen organischen Verbindungen bei 300 bis 650°C zum Magnetit und Oxidation des Magnetits mit sauerstoffhaltigen Gasen bei 150 bis 500°C zum nadelförmigen ferrimagnetischen Eisenoxid der Formel FeO$_x$, mit Werten für x von 1,33 bis 1,50, dadurch gekennzeichnet, daß die Temperbehandlung des nadelförmigen Eisen(III)-oxids oder Eisen(III)-oxidhydroxids bei 220 bis 460°C und einem Wasserdampfpartialdruck von mindestens 30 mbar während 0,05 bis 8 Stunden durchgeführt wird.

2. Verfahren gemäß Anspruch 1, dadurch gekennzeichnet, daß die Temperbehandlung des nadelförmigen Eisen(III)-oxids oder Eisen(III)-oxidhydroxids in einer Atmosphäre aus Wasserstoff und/oder einer dampfförmigen in Gegenwart von Eisenoxiden zersetzlichen organischen Verbindung bei einer Temperatur oberhalb 220°C jedoch unterhalb der für die Reduktion erforderlichen Temperatur und einem Wasserdampfpartialdruck von mindestens 30 mbar während 0,05 bis 8 Stunden durchgeführt wird.

3. Verfahren gemäß Anspruch 1 oder 2, dadurch gekennzeichnet, daß der Wasserdampfpartialdruck während der Temperbehandlung 70 bis 1013 mbar beträgt.

4. Verfahren gemäß Anspruch 1 oder 2, dadurch gekennzeichnet, daß das Eisen(III)-oxid $\alpha$- oder $\gamma$-Eisen(III)-oxid ist.

5. Verfahren gemäß Anspruch 1 oder 2, dadurch gekennzeichnet, daß das Eisen(III)-oxidhydroxid in der $\alpha$- und/oder $\gamma$-Modifikation vorliegt.

6. Verwendung der gemäß Anspruch 1 bis 4 hergestellten nadelförmigen ferrimagnetischen Eisenoxiden zur Herstellung von magnetischen Aufzeichnungsträgern.

**Claims**

1. A process for the manufacture of acicular ferrimagnetic iron oxide by heating an acicular iron(III) oxide or iron(III) oxide hydroxide, reducing the resulting product to magnetite at from 300 to 650°C by means of hydrogen and/or CO and/or an organic compound which can de compose in the presence of iron oxide, and oxidizing the magnetite with an oxygen-containing gas at from 150 to 500°C, to give acicular ferrimagnetic iron oxide of the formula FeO$_x$, where X is from 1.33 to 1.50, wherein the heating of the acicular iron(III) oxide or iron(III) oxide hydroxide is carried out at from 220 to 460°C under a water vapor partial pressure of not less than 30 mbar for from 0.05 to 8 hours.

2. A process as claimed in claim 1, wherein the heating of the acicular iron(III) oxide or iron(III) oxide hydroxide is carried out in an atmosphere of hydrogen and/or an atmosphere of the vapor of an organic compound which can decompose in the presence of iron oxide, at above 220°C but below the temperature required for the reduction, and under a water vapor partial pressure of not less than 30 mbar, for from 0,05 to 8 hours.

3. A process as claimed in claim 1 or 2, wherein the water vapor partial pressure during heating is from 70 to 1013 mbar.

4. A process as claimed in claim 1 or 2, wherein the iron(III) oxide is $\alpha$- or $\gamma$-iron(III) oxide.

5. A process as claimed in claim 1 or 2, wherein the iron(III) oxide hydroxide is present in the $\alpha$- and/or $\gamma$-modification.

6. The use of the acicular ferrimagnetic iron oxide manufactured as claimed in claims 1 to 4 for the production of magnetic recording media.

**Revendications**

1. Procédé de préparation d'oxyde de fer ferrimagnétique aciculaire, par recuit d'oxyde de fer(III) ou d'hydroxyde d'oxyde de fer(III) aciculaire, réduction ou produit résultant en magnétite, entre 300 et 650°C, avec de l'hydrogène et/ou CO et/ou des composés organiques décomposables en présence d'oxydes de fer, et oxydation de la magnétite en oxyde de fer ferrimagnétique aciculaire de formule FeO$_x$, x ayant une valeur de 1,33 à 1,50, avec des gaz oxygénés, à une température de 150 à 500°C, caractérisé par le fait que le recuit de l'oxyde ou hydroxyde d'oxyde de fer(III) aciculaire est effectué à une température de 220 à 460°C et une pression partielle de vapeur d'eau d'au moins 30 mbar, pendant 0,05 à 8 heures.

2. Procédé selon la revendication 1, caractérisé par le fait que le recuit de l'oxyde ou hydroxyde d'oxyde de fer(III) aciculaire est effectué en atmosphère d'hydrogène et/ou d'un composé organique sous forme de vapeur, décomposable en présence d'oxydes de fer, à une température supérieure à 220°C, toutefois inférieure à la température nécessaire pour la réduction et à une pression partielle de vapeur d'eau d'au moins 30 mbar, pendant 0,05 à 8 heures.

3. Procédé selon la revendication 1 ou 2, caractérisé par le fait que la pression partielle de vapeur d'eau est de 70 à 1013 mbar pendant le recuit.

4. Procédé selon la revendication 1 ou 2, caractérisé par le fait que l'oxyde de fer(III) est de l'oxyde de fer(III)-$\alpha$ ou $\gamma$.

5. Procédé selon la revendication 1 ou 2, caractérisé par le fait que l'hydroxyde d'oxyde de fer(III) se trouve dans la modification $\alpha$- et/ou $\gamma$.

6. Utilisation des oxydes de fer ferrimagnétiques aciculaires préparés selon la revendication 1 à 4 pour la fabrication de supports d'enregistrement magnétiques.